# EUROPÄISCHE PATENTANMELDUNG

(11) **EP 3 323 296 A1**
(43) Veröffentlichungstag der Anmeldung: **23.05.2018**
(21) Anmeldenummer: 16002427.9
(22) Anmeldetag: 16.11.2016
(51) Int. Cl.: A23G 1/32, A23G 1/42

(54) **SCHOKOLADE MIT ZUGESETZTEN NÄHRSTOFFEN UND VERFAHREN ZUR HERSTELLUNG EINER SCHOKOLADE**

(71) Anmelder: Maresol GmbH & Co. KG, 76829 Landau (DE)
(72) Erfinder: Edelmann, Inka, 56068 Koblenz (DE); Krüger, Peter, 56068 Koblenz (DE)
(74) Vertreter: Hannke, Christian

(57) **Zusammenfassung**

Die Erfindung betrifft eine Schokolade (1) mit zugesetzten Nährstoffen, wobei die Nährstoffe Vitamine und/oder Mineralstoffe umfassen. Zumindest einer der zugesetzten Nährstoffe liegt in der Schokolade (1) in einer solchen Dosierung vor, dass die beim Verzehr der Schokolade aufgenommene biologisch wirksame Dosis des Nährstoffes einem Zusatzbedarf schwangerer und/oder stillender Frauen an diesem Nährstoff entspricht.

Die Erfindung betrifft ferner ein Verfahren(99) zur Herstellung einer Schokolade zumindest mit folgenden Schritten: Herstellen (100) einer Schokoladengrundmasse; Herstellen (110) einer Nährstoffmischung mit Nährstoffen, wobei die Nährstoffe Vitamine und/oder Mineralstoffe umfassen, wobei zumindest einer der zugesetzten Nährstoffe in der Schokolade in einer solchen Dosierung vorliegt, dass die beim Verzehr der Schokolade aufgenommene biologisch wirksame Dosis des Nährstoffes einem Zusatzbedarf schwangerer und/oder stillender Frauen an diesem Nährstoff entspricht; Zugeben (120) der Nährstoffmischung zu der Schokoladengrundmasse, wobei die Schokoladengrundmasse auf eine Zugabetemperatur oberhalb der minimalen Schmelztemperatur der Schokoladengrundmasse temperiert wird; Vermischen (130) der Nährstoffmischung mit der Schokoladengrundmasse zu einer Schokoladenmasse, wobei die Schokoladenmasse auf eine Mischtemperatur oberhalb der minimalen Schmelztemperatur der Schokoladengrundmasse temperiert wird, und Abkühlen (140) der Schokoladenmasse auf eine Umgebungstemperatur.

## Beschreibung

Die Erfindung betrifft eine Schokolade mit zugesetzten Nährstoffen und ein Verfahren zur Herstellung einer Schokolade.

Während der Schwangerschaft und Stillzeit haben Frauen einen erhöhten Bedarf an Vitaminen und anderen Nährstoffen, der über die normale Ernährung in der Regel nicht gedeckt wird. Untersuchungen, unter anderem durch die Cochrane Collaboration und in der Nationalen Verkehrsstudie II (NVS II), zeigen, dass die Nahrungsergänzung mit Nährstoffen während der Schwangerschaft und Stillzeit zu einer signifikanten Verbesserung des Schwangerschaftsausgangs und der Gesundheit des Neugeborenen führen. Daher empfiehlt beispielsweise die Deutsche Gesellschaft für Ernährung schwangeren und stillenden Frauen, bestimmte Nährstoffe als Nahrungsergänzung einzunehmen.

Es existieren daher Nahrungsergänzungstabletten, die die empfohlenen Nährstoffe in der empfohlenen Tagesdosierung enthalten (z.B. Steripharm Folio). Die Einnahme von Tabletten wird von vielen betroffenen Frauen jedoch als störend empfunden, vernachlässigt oder vergessen, sodass keine regelmäßige Einnahme erfolgt und nicht die empfohlene Nährstoffmenge aufgenommen wird.

Für eine angenehmere Einnahme wurden Müsliriegel mit zugesetzten Nährstoffen entwickelt (z.B. Milupa Müsliriegel Profutura mama). Es sind jedoch nicht alle für Schwangerschaft und Stillzeit empfohlenen Nährstoffe enthalten und die Dosierung der enthaltenen Nährstoffe ist so gering, dass 2,5 Müsliriegel zu 40 g verzehrt werden müssen, um die empfohlene Tagesdosis der Nährstoffe aufzunehmen. Die bekannten Müsliriegel können daher Nahrungsergänzungstabletten nicht ersetzen.

Schokolade hat viele positive Wirkungen auf die Psyche des Menschen und stärkt Herz und Gefäße, Gehirn und Gedächtnis. Studienergebnisse zeigen, dass Menschen, die täglich hochwertige Schokolade essen, weniger zu Übergewicht neigen. Zudem enthält dunkle Schokolade eine Vielzahl an Antioxidantien. Schon die alleinigen Inhaltsstoffe hochwertiger Schokolade beeinflussen die Stimmungslage positiv: Bei Schokoladenessern kursieren nachweislich weniger Stresshormone im Blut.

Aufgrund der positiven Wirkungen von Schokolade gibt es in der Literatur bereits Ansätze, Nahrungsergänzungsmittel in Form von Schokolade zu entwickeln. Die Druckschrift EP 1358804 A1 beschreibt eine Milchschokolade, die als Träger funktionaler Zutaten, unter anderem für schwangere Frauen, dienen kann. Es werden jedoch weder Art, Dosierung, Verteilung oder Form der funktionalen Zutaten noch die Art ihrer Zugabe zur Schokolade näher spezifiziert.

Die Druckschrift US 6576252 B2 offenbart Ernährungsriegel für schwangere oder stillende Frauen. Die Ernährungsriegel enthalten ein oder mehrere Vitamine und/oder Mineralstoffe, Dehydroascorbinsäure (DHA) und Mittel zur Überdeckung des Geschmacks von DHA. Die Vitamine und Mineralstoffe können so dosiert sein, dass genau ein Ernährungsriegel den täglichen Zusatzbedarf einer schwangeren oder stillenden Frau deckt. Wegen ihrer unterschiedlichen Löslichkeit werden fettlösliche Nährstoffe zu einer fett- und getreidebasierten Grundschicht des Ernährungsriegels zugegeben und wasserlösliche Nährstoffe zu einer karamellbasierten Oberschicht, die auf der Grundschicht angebracht wird. Grundschicht und Oberschicht können von einer Umhüllung, beispielsweise aus Schokolade, umhüllt werden. Durch die zumindest zwei Schichten und die Aufteilung der Nährstoffe nach ihrer Löslichkeit ergibt sich ein aufwändiges Herstellungsverfahren.

Die Druckschrift US 2634210 A beschreibt ein Vitamine enthaltendes Schokoladennahrungsmittel mit zwei miteinander verbundenen Teilen, wobei Mineralstoffe in dem einen Teil und Vitamine, die nicht mit den Mineralstoffen verträglich sind, in dem anderen Teil verteilt sind. Mindestens einem Teil ist pulverförmiges Milchprotein als Diffusionshemmer zugesetzt, um eine Vermischung von Stoffen aus beiden Teilen zu verhindern. Wie bei US 6576252 B2 ist auch hier das Herstellungsverfahren aufwändig. US 2634210 A enthält keine Angaben zum Zweck der Vitamin- oder Mineralstoffzugabe und die genannten Stoffe und Dosierungen stimmen nicht mit den Empfehlungen für Schwangerschaft und Stillzeit überein. Es ist daher nicht erkenntlich, ob die beschriebene Methode zur Zugabe der in Schwangerschaft und Stillzeit empfohlenen Nährstoffdosen geeignet ist.

Die Druckschrift EP 2018172 B1 beschreibt die Verabreichung von Wirkstoffen mit Hilfe einer Schokoladenträgersubstanz. Die offenbarte essbare Zusammensetzung enthält Calciumcarbonatpulver mit einem mittleren Partikeldurchmesser zwischen 10 und 13 µm, Schokolade und optional einen oder mehrere Wirkstoffe. Es werden zwar alle für Schwangerschaft und Stillzeit empfohlenen Nährstoffe als mögliche Wirkstoffe genannt, aber nicht in den empfohlenen Dosierungen. Es ist daher nicht erkenntlich, ob die beschriebene Methode zur Zugabe der in Schwangerschaft und Stillzeit empfohlenen Nährstoffdosen geeignet ist. Die beschriebene Methode eignet sich besonders, um sehr hohe Mengen von Calciumcarbonat von bis zu 30 % der Zusammensetzung zuzugeben ohne Geschmack und Mundgefühl der Zusammensetzung zu beeinträchtigen. Wenn, wie in der Schwangerenversorgung, keine so hohen Konzentrationen benötigt werden, erweist sich das in EP 2018172 B1 beschriebene Verfahren als unangemessen aufwändig.

Daraus ergibt sich die technische Aufgabe, eine einfach herzustellende und angenehm zu verzehrende, einfach kontrollierbare und sichere Darreichungsform von Nährstoffen zur Nahrungsergänzung in der Schwangerschaft und Stillzeit zu schaffen.

Diese Aufgabe wird durch eine Schokolade mit zugesetzten Nährstoffen gemäß Anspruch 1 und ein Verfahren zur Herstellung einer Schokolade gemäß Anspruch 9 gelöst.

Vorteilhafte Ausführungen ergeben sich aus den Unteransprüchen.

Eine erfindungsgemäße Schokolade enthält zugesetzte Nährstoffe, wobei die Nährstoffe Vitamine und/oder Mineralstoffe umfassen. Zumindest einer der zugesetzten Nährstoffe liegt in der Schokolade in einer solchen Dosierung vor, dass die beim Verzehr der Schokolade aufgenommene biologisch wirksame Dosis des Nährstoffes einem Zusatzbedarf schwangerer und/oder stillender Frauen an diesem Nährstoff entspricht.

Bei Schokolade handelt es sich im Sinne der Erfindung um ein kakaohaltiges Lebensmittel, das nicht auf eine bestimmte Zusammensetzung oder Darreichungsform beschränkt ist. Unter den Begriff Schokolade fallen also beispielsweise Bitterschokolade, Milchschokolade und weiße Schokolade in Form von Pulver, Streuseln, Tafeln, Riegeln und beliebigen anderen Hohl- und Vollkörpern. Weiterhin ist auch denkbar, dass die Schokolade einen Bestandteil eines aus der Schokolade und zumindest einem weiteren Bestandteil zusammengesetzten Lebensmittels bildet. Die Schokolade kann beispielsweise Bestandteil einer Praline sein und/oder mit einem Gebäck kombiniert sein.

Unter Dosis wird die Menge eines Stoffes verstanden, die in einer Portion und/oder einer Verpackungseinheit, insbesondere in einem Stück, einem Riegel oder einer Tafel der Schokolade enthalten ist.

Mit Zusatzbedarf wird der zusätzliche Bedarf an einem Nährstoff, den eine schwangere und/oder stillende Frau im Vergleich zu einer nicht schwangeren und/oder stillenden Frau in dem Zeitraum, in dem die Schokolade verzehrt wird, hat. Bei dem Zusatzbedarf kann es sich insbesondere um den durchschnittlichen täglichen Zusatzbedarf schwangerer und/oder stillender Frauen über die gesamte Schwangerschaft und/oder Stillzeit handeln. Je nach Verzehrhäufigkeit kann der Zusatzbedarf auch nur ein Bruchteil des täglichen Zusatzbedarfes oder ein Vielfaches des täglichen Zusatzbedarfes sein - beispielsweise die Hälfte des täglichen Zusatzbedarfs, wenn täglich zwei Portionen Schokolade verzehrt werden, oder das Doppelte des täglichen Zusatzbedarfs, wenn nur jeden zweiten Tag eine Portion Schokolade verzehrt wird. Um Veränderungen des Zusatzbedarfs im Laufe der Schwangerschaft und/oder Stillzeit Rechnung zu tragen, kann auch für unterschiedliche Phasen der Schwangerschaft und/oder Stillzeit ein unterschiedlicher Zusatzbedarf berücksichtigt werden.

Unter biologisch wirksamer Dosis wird die Dosis eines Nährstoffes verstanden, die beim Verzehr der Schokolade vom Körper der Verzehrenden aufgenommen wird und dort eine biologische Wirkung zeigt. Die biologisch wirksame Dosis eines Nährstoffes entspricht höchstens der der Schokolade zugesetzten Dosis dieses Nährstoffes. In der Regel ist die biologisch wirksame Dosis jedoch kleiner als die zugesetzte Dosis, da ein Teil des Nährstoffes bereits vor der Zugabe zur Schokolade, während der Verarbeitung und/oder während der Lagerung der Schokolade, beispielsweise durch physikalische Einflüsse wie Wärme oder durch chemische Reaktionen mit anderen Inhaltsstoffen der Schokolade, zu einer biologisch nicht wirksamen Form degeneriert sein kann. Weiterhin kann die Aufnahme des Nährstoffes in den Körper durch weitere Inhaltsstoffe der Schokolade gehemmt sein.

Durch moderne Methoden der Lebensmittelanalytik, zum Beispiel Hochdruck-Flüssigkeitschromatographie oder Gaschromatographie, kann ein Fachmann erfindungsgemäß die biologisch wirksame Dosis eines Nährstoffs in einer Schokolade bestimmen und daraus den Zusammenhang zwischen zugesetzter Dosis und biologisch wirksamer Dosis in dieser Schokolade ermitteln. Den Zusatzbedarf eines Nährstoffes bei schwangeren und/oder stillenden Frauen kann der Fachmann aus bekannten Veröffentlichungen, beispielsweise der Deutschen Gesellschaft für Ernährung, ermitteln. Aus dem zuvor ermittelten Zusammenhang zwischen zugesetzter und biologisch wirksamer Dosis kann der Fachmann somit ermitteln, welche Dosis des Nährstoffes er der Schokolade zusetzen muss, um die gewünschte biologisch wirksame Dosis zu erhalten.

Dadurch, dass die Schokolade zumindest einen Nährstoff in der dem Zusatzbedarf entsprechenden biologisch wirksamen Dosis enthält, werden Über- und Unterdosierungen des Nährstoffes, die zu Komplikationen führen können, verhindert.

Zumindest einer der zugesetzten Nährstoffe kann in der Schokolade homogen verteilt sein. Durch eine homogene Verteilung wird sichergestellt, dass in jeder Portion der Schokolade die gleiche Nährstoffmenge enthalten ist, sodass eine ungleichmäßige Aufnahme des Nährstoffes, die zu Über- und/oder Unterdosierungen führen kann, vermieden wird.

Zumindest einer der zugesetzten Nährstoffe in der Schokolade kann in einer solchen Dosierung vorliegen, dass die beim Verzehr der Schokolade aufgenommene biologisch wirksame Dosis des Nährstoffes dem individuellen Zusatzbedarf einer schwangeren und/oder stillenden Frau an diesem Nährstoff entspricht.

Bei den allgemein bekannten Empfehlungen zum Zusatzbedarf schwangerer und/oder stillender Frauen an Nährstoffen handelt es sich um Durchschnittswerte, die anhand einer großen Anzahl von Frauen ermittelt wurden. Zudem beziehen sich diese Dosisempfehlungen nicht auf die biologisch wirksame Dosis, insbesondere in Abhängigkeit der verabreichten Beistoffe und/oder Füllstoffe und/oder der - insbesondere individuellen - Metabolisierung. Der individuelle Zusatzbedarf einer einzelnen Frau kann je nach Lebensumständen, Ernährungsgewohnheiten und/oder genetischer Veranlagung von den Durchschnittswerten abweichen, sodass die Gabe der empfohlenen Dosen zu einer Über- und/oder Unterversorgung mit einem oder mehreren Nährstoffen führen kann. Beispielsweise durch Befragungen zu Lebensumständen und/oder Ernährungsgewohnheiten und/oder durch Blut- und/oder Urinanalysen, insbesondere im Rahmen der üblichen Schwangerschafts-Vorsorgeuntersuchungen, kann der individuelle Zusatzbedarf einer schwangeren und oder stillenden Frau an Nährstoffen bestimmt werden. Wenn dieser Frau eine Schokolade mit einer biologisch wirksamen Dosis eines Nährstoffes, die ihrem individuellen Zusatzbedarf entspricht, verabreicht wird, kann so eine besonders gezielte und wirksame Behandlung erreicht werden.

Es ist bekannt, dass Ascorbinsäure (Vitamin C) über ihr Stoffwechselprodukt Oxalsäure die Bildung von Harnsteinen begünstigt. Daher sollten Schwangere und/oder Stillende, die durch andere Risikofaktoren bereits ein erhöhtes Harnsteinrisiko haben, keine weiteren das Harnsteinrisiko erhöhenden Nährstoffe zu sich nehmen. Folglich ist eine Schokolade, deren zugesetzte Nährstoffe keine Ascorbinsäure und/oder keine Dehydroascorbinsäure (DHA), insbesondere keine Stoffe, die das Harnsteinrisiko einer Konsumentin der Schokolade erhöhen, umfassen, vorteilhaft.

Die Schokolade pro 100 g Schokoladenmasse kann zugesetzte Nährstoffe in folgender biologisch wirksamer Dosis enthalten:
0,75-15 mg, beispielsweise 1,2-1,8 mg, insbesondere 1,5 mg, Vitamin A;
0,5-10 mg, beispielsweise 0,5-1,4 mg, insbesondere 1,0 mg, Vitamin B1;
0,75-15 mg, beispielsweise 1,2-1,8 mg, insbesondere 1,5 mg, Vitamin B2;
8,5-170 mg, beispielsweise 14-20 mg, insbesondere 17 mg, Vitamin B3 (Niacin);
3-60 mg, beispielsweise 4,8-7,2 mg, insbesondere 6,0 mg, Vitamin B5 (Panthotensäure);
1-20 mg, beispielsweise 1,5-2,4 mg, insbesondere 2,0 mg, Vitamin B6;
0,3-6 mg, beispielsweise 0,48-0,72 mg, insbesondere 0,6 mg, Vitamin B9 (Follat);
2-40 µg, beispielsweise 3,2-4,8 µg, insbesondere 4,0 µg, Vitamin B12;
25-500 µg, beispielsweise 40-60 µg, insbesondere 50 µg, Vitamin D;
10-200 mg, beispielsweise 15-24 mg, insbesondere 20 mg, Vitamin E;
15-300 mg, beispielsweise 24-36 mg, insbesondere 30 mg, Vitamin H (Biotin);
30-600 µg, beispielsweise 48-72 µg, insbesondere 60 µg, Vitamin K;
0,5-10 g, beispielsweise 0,5-1,4 g, insbesondere 1,0 g, Calcium;
25-500 µm, beispielsweise 40-60 µg, insbesondere 50 µg, Chrom;
10-200 µg, beispielsweise 15-24 µg, insbesondere 20 µg, Jod;
0,4-8 g, beispielsweise 0,66-0,96 g, insbesondere 0,80 g, Phosphor;
35-700 mg, beispielsweise 56-84 mg, insbesondere 70 mg, Selen und/oder
5-100 mg, beispielsweise 8-12 mg, insbesondere 10 mg, Zink.

Durch die angegebenen Dosen lässt sich vorteilhafterweise mit Portionsgrößen von 5-1000 g, beispielsweise 80-120 g, insbesondere 100 g Schokolade der durchschnittliche tägliche Zusatzbedarf schwangerer und/oder stillender Frauen an den angegebenen Nährstoffen decken.

Die Schokolade kann eine Milchschokolade, beispielsweise mit mindestens 35 %, insbesondere mit mindestens 42 % Kakaobestandteilen, oder eine Bitterschokolade, beispielsweise mit mindestens 55 %, insbesondere mit mindestens 60 % Kakaobestandteilen, sein. Durch einen hohen Kakaoanteil treten vorteilhafterweise die positiven Wirkungen von Kakaobestandteilen, wie Polyphenolen, Antioxidantien, N-Phenylpropenoyl-L-aminosäureamid und/oder Thebromin, besonders hervor.

Die Schokolade kann zumindest ein Anzeigemittel für eine Dosieranleitung umfassen. Das Anzeigemittel kann insbesondere eine Anzahl von Unterteilungen, bevorzugt Sollbruchstellen, und/oder zumindest eine Beschriftung umfassen. So ist beispielsweise denkbar, dass durch Sollbruchstellen, zum Beispiel von einer Schokoladentafel, ein Schokoladenstück abgebrochen werden kann, dass jeweils eine Tagesdosis an zugesetzten Nährstoffen oder die Hälfte, ein Drittel oder einen anderen Anteil der Tagesdosis enthält, wenn mehrere Stücke pro Tag verzehrt werden sollen. Es kann auch vorgesehen sein, dass unterschiedliche Portionen der Schokolade unterschiedliche, insbesondere an Veränderungen des Zusatzbedarfs im Laufe eines Tages und/oder im Laufe der Schwangerschaft und/oder Stillzeit angepasste, Nährstoffdosen und/oder Zusammensetzungen enthalten. Durch zumindest eine Beschriftung - insbesondere eine Anzahl von Wörtern, Buchstaben, Zahlen und/oder Symbolen - auf, an und/oder in der Schokolade kann sichergestellt werden, dass die Schwangere und/oder Stillende die zu einem gegebenen Zeitpunkt jeweils richtige Portion der Schokolade erkennt und somit Fehldosierungen vermeidet.

Das erfindungsgemäße Verfahren zur Herstellung einer Schokolade, insbesondere einer erfindungsgemäßen Schokolade, umfasst zumindest die folgenden Schritte:
a. Herstellen einer Schokoladengrundmasse;
b. Herstellen einer Nährstoffmischung mit Nährstoffen, wobei die Nährstoffe Vitamine und/oder Mineralstoffe umfassen, wobei zumindest einer der zugesetzten Nährstoffe in der Schokolade in einer solchen Dosierung vorliegt, dass die beim Verzehr der Schokolade aufgenommene biologisch wirksame Dosis des Nährstoffes einem Zusatzbedarf schwangerer und/oder stillender Frauen an diesem Nährstoff entspricht;
c. Zugeben der Nährstoffmischung zu der Schokoladengrundmasse, wobei die Schokoladengrundmasse auf eine Zugabetemperatur oberhalb der minimalen Schmelztemperatur der Schokoladengrundmasse temperiert wird;
d. Vermischen der Nährstoffmischung mit der Schokoladengrundmasse zu einer Schokoladenmasse während einer Mischzeit, wobei die Schokoladenmasse auf eine Mischtemperatur oberhalb der minimalen Schmelztemperatur der Schokoladengrundmasse temperiert wird, und
e. Abkühlen der Schokoladenmasse auf eine Umgebungstemperatur, wobei die Schokoladenmasse zu einer Schokolade erstarrt.

Das Herstellen der Schokoladengrundmasse erfolgt beispielsweise mit fachüblichen Methoden der Schokoladenherstellung und kann insbesondere das Vermischen einer Kakaomasse mit Zucker, Milchprodukten und/oder Gewürzen zu einer Schokoladengrundmasse sowie das Vermahlen, Conchieren und/oder Temperieren der Schokoladengrundmasse umfassen. Das Herstellen der Nährstoffmischung erfolgt beispielsweise durch das Vermischen kommerziell erhältlicher Nährstoffe - insbesondere Vitamine und/oder Mineralstoffe - in Reinform und/oder in Mischungen, beispielsweise als Pulver, Lösung und/oder Dispersion. Das Vermischen der Nährstoffe kann mit fachüblichen Methoden, wie zum Beispiel Trommel- oder Rührmischverfahren, erfolgen. Das Zugeben der Nährstoffmischung zur Schokoladengrundmasse und Vermischen der Nährstoffmischung mit der Schokoladengrundmasse kann wiederum mit fachüblichen Methoden der Schokoladenherstellung erfolgen. Insbesondere können das Zugeben und das Vermischen zumindest teilweise gleichzeitig erfolgen, um in kurzer Zeit eine besonders gleichmäßige Verteilung der Nährstoffe in der Schokoladengrundmasse zu erreichen. Es ist vorteilhaft, das Zugeben und Vermischen bei einer Zugabetemperatur der Schokoladengrundmasse oberhalb ihrer minimalen Schmelztemperatur durchzuführen, weil so die Schokoladengrundmasse in einem zumindest teilweise geschmolzenen Zustand vorliegt, wodurch sich die Nährstoffmischung gut in der Schokoladengrundmasse verteilen kann. Die Temperatur der Schokoladengrundmasse kann durch in der Schokoladenherstellung übliche Methoden, beispielsweise durch zumindest einen Heizwiderstand, einen Infrarot-Heizstrahler, eine Wärmepumpe und/oder Konvektionskühlung, eingestellt werden. Das Abkühlen auf eine Umgebungstemperatur kann ebenfalls beispielsweise durch eine Wärmepumpe und/oder Konvektionskühlung erfolgen.

Vor, mit und/oder nach der Nährstoffmischung können der Schokoladengrundmasse auch weitere Zusatzstoffe, beispielsweise zur Veränderung des Geschmacks der Schokolade, insbesondere Salze, Gewürze, Nüsse, Kerne, Beeren, Früchte, Zucker, Karamell, Gebäck, Blüten, Samen und/oder Kaffeeerzeugnisse zugegeben werden. Dabei muss jedoch beachtet werden, dass Zusatzstoffe durch Wechselwirkungen mit Nährstoffen die biologisch wirksame Dosis dieser Nährstoffe verändern können.

In dem Verfahren zur Herstellung einer Schokolade kann die Mischzeit kürzer sein als die minimale Zersetzungszeit des temperaturlabilsten Nährstoffs der Nährstoffmischung bei der Mischtemperatur. Durch diese Wahl der Mischzeit wird sichergestellt, dass kein Nährstoff während des Vermischens thermisch zersetzt wird, somit nicht mehr in biologisch wirksamer Form vorliegt und daher den Zusatzbedarf einer schwangeren und/oder stillenden Frau an diesem Nährstoff nicht decken kann. Die temperaturabhängigen Zersetzungszeiten der zugesetzten Nährstoffe kann ein mit der Durchführung des Verfahrens betrauter Fachmann in entsprechenden Tabellenwerken nachschlagen und/oder experimentell durch Messung der Nährstoffmenge vor und nach dem Zugeben und/oder Vermischen ermitteln.

Es ist auch denkbar, dass die Mischzeit die jeweilige Zersetzungszeit zumindest eines Nährstoffes überschreitet, wenn eine entsprechend erhöhte Menge dieses Nährstoffes zugegeben wird, sodass am Ende des Verfahrens die verbleibende biologisch wirksame Dosis des Nährstoffes einem Zusatzbedarf schwangerer und/oder stillender Frauen entspricht. Als vorteilhaft für eine homogene Verteilung und zur Erhaltung der Nährstoffe hat es sich erwiesen, das Zugeben gleichzeitig mit dem Vermischen durchzuführen und/oder eine Mischzeit von 5 min bis 25 min, beispielsweise 10 min bis 20 min, insbesondere 13 min bis 17 min zu wählen. Besonders vorteilhaft ist eine Mischzeit von 15 min, die zu einer optimal homogenen Verteilung der zugesetzten Nährstoffe führt, ohne dass zugesetzte Nährstoffe bei einer typischen Mischtemperatur von beispielsweise 30,8 °C zersetzt werden.

In dem Verfahren zur Herstellung einer Schokolade können die Zugabetemperatur und/oder die Mischtemperatur in einem Temperaturbereich oberhalb der minimalen Schmelztemperatur der Schokoladengrundmasse und unterhalb der minimalen Zersetzungstemperatur des temperaturlabilsten Nährstoffs der Nährstoffmischung liegen. Als minimale Zersetzungstemperatur wird eine Temperatur bezeichnet, unterhalb derer ein Nährstoff auch während einer Zeit über der üblichen Dauer des Verfahrens, beispielsweise eine Stunde, nicht zersetzt wird. Durch diese Temperaturwahl ergibt sich eine größere Flexibilität in der Wahl der Mischzeit, während gleichzeitig kein Nährstoff durch thermische Zersetzung verloren geht.

In dem Verfahren zur Herstellung einer Schokolade können die Zugabetemperatur und/oder die Mischtemperatur in den mittleren 80 %, beispielsweise in den mittleren 40 %, insbesondere in den mittleren 20 %, des Temperaturbereichs liegen. Durch diese Temperaturwahl wird sichergestellt, dass auch bei Schwankungen der Temperatur und/oder der thermischen Eigenschaften von Schokoladengrundmasse und/oder zugesetzten Nährstoffen die Schokoladengrundmasse ausreichend geschmolzen ist, um das Vermischen zu ermöglichen, und keine Nährstoffe thermisch zersetzt werden. Besonders vorteilhaft für eine einfache Prozessführung ist es, wenn Zugabetemperatur und Mischtemperatur identisch sind. Eine gute Verarbeitbarkeit bei gleichzeitiger Erhaltung der Nährstoffe wird erreicht bei einer Zugabetemperatur und Mischtemperatur von jeweils 27-35 °C, beispielsweise 29-32 °C, insbesondere 30-31 °C. Besonders vorteilhaft betragen die Zugabe- und Mischtemperatur jeweils 30,8 °C, sodass eine optimale Verarbeitbarkeit erreicht wird, ohne dass zugesetzte Nährstoffe während einer typischen Mischzeit von beispielsweise 15 min zersetzt werden.

In dem Verfahren zur Herstellung einer Schokolade kann die Nährstoffmischung in Pulverform oder als flüssige Lösung oder als Dispersion in einer Flüssigkeit zugegeben werden. Als besonders vorteilhaft hat sich die Zugabe in Pulverform erwiesen, da manche der Nährstoffe nur in wässrigen Lösungsmitteln und andere Nährstoffe nur in ölbasierten Lösungsmitteln löslich sind. Die Verwendung verschiedenartiger Lösungsmittel kann jedoch zu einer mangelhaften Mischbarkeit führen. Weiterhin kann der Zusatz von Wasser zu Schokolade zu deren Verklumpung führen. Aus diesen Gründen ist es vorteilhaft, die Nährstoffmischung als, insbesondere trockenes, Pulver zuzusetzen.

In dem Verfahren zur Herstellung einer Schokolade kann die Nährstoffmischung eine als Schokoladenzutat geeignete Trägersubstanz, beispielsweise einen Zucker, insbesondere Dextrose, enthalten. Durch die Zugabe einer Trägersubstanz, in der die Nährstoffe vorteilhafterweise gleichmäßig verteilt sind, wird der Schokoladengrundmasse eine größere Menge Nährstoffmischung zugegeben, um einen Zusatzbedarf schwangerer und/oder stillender Frauen zu decken. Dadurch ist einer geringere absolute Genauigkeit bei der Festlegung der Zugabemenge notwendig, wodurch das Verfahren leichter mit Standardgeräten der Schokoladenherstellung realisiert werden kann.

Nachfolgend wird die Erfindung anhand von Ausführungsbeispielen beschrieben, die mit Hilfe der Figuren näher erläutert werden.

Es zeigen:
Fig. 1 eine schematische Darstellung einer erfindungsgemäßen Schokolade und
Fig. 2 eine schematische Ausgestaltung eines erfindungsgemäßen Verfahrens.

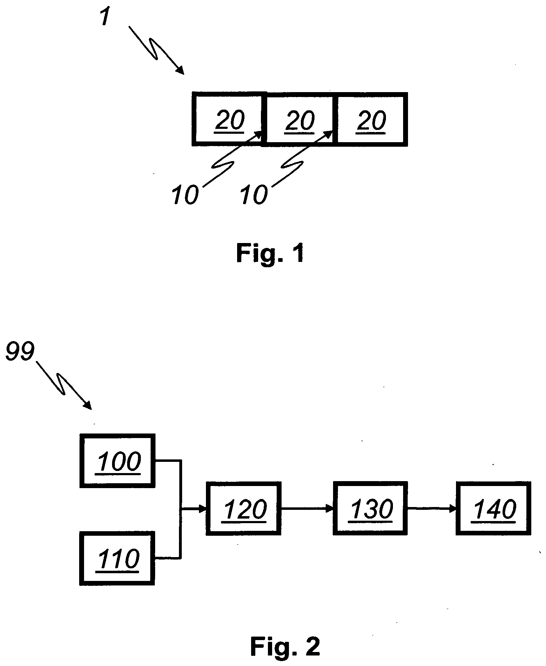

Figur 1 zeigt eine schematische Darstellung einer beispielhaften, erfindungsgemäßen Schokolade 1. Die dargestellte Schokolade 1 weist eine Anzahl von Unterteilungen 10 in Form von Sollbruchstellen auf. Durch die Sollbruchstellen können die Schokolade 1 auf einfache Weise Portionsstücke 20 abgebrochen werden. In der Schokolade 1 sind zugesetzte Nährstoffe, beispielsweise gemäß Tabelle 1, vorteilhafterweise homogen verteilt. Dadurch kann jedes Portionsstück 20 die gleiche Dosis der zugesetzten Nährstoffe enthalten, wobei die Dosis beispielsweise dem täglichen Zusatzbedarf einer schwangeren und/oder stillenden Frau entspricht.

**Tabelle 1: zugesetzte Nährstoffe**

| **Nährstoff** | **zugesetzte Masse pro 100 g Schokolade** |
|---|---|
| Vitamin A | 1,5 mg |
| Vitamin B1 | 1 mg |
| Vitamin B2 | 1,5 mg |
| Vitamin B3 (Niacin) | 17 mg |
| Vitamin B5 (Panthotensäure) | 6 mg |
| Vitamin B6 | 2 mg |
| Vitamin B9 (Follat) | 600 µg |
| Vitamin B12 | 4 µg |
| Vitamin D | 50 µg |
| Vitamin E | 20 mg |
| Vitamin H (Biotin) | 30 mg |
| Vitamin K | 60 µg |
| Calcium | 1000 mg |
| Chrom | 50 µg |
| Jod | 20 µg |
| Phosphor | 800 mg |
| Selen | 70 mg |
| Zink | 10 mg |
| Dextrose | 3,8 g |

Eine erfindungsgemäße Schokolade kann zum Beispiel als dunkle Schokoladenkuvertüre aus 45 % Kakaotrockenmasse, 40 % Zucker, 15 % Kakaobutter, unter 1 % Sojalecithin und unter 0,1 % Vanilleextrakt ausgestaltet sein, die beispielsweise Massenanteile von 25 % gesättigten Fettsäuren, 45 % Kohlenhydraten, 40 % Zucker, 10 %Ballaststoffen und 5,2 % Eiweiß sowie die in Tabelle 1 aufgeführten, zugesetzten Nährstoffe enthält.

Eine erfindungsgemäße Schokolade kann zum Beispiel als Edel-Vollmilch-Schokoladenkuvertüre aus 20 % Vollmilchpulver, 15 % Kakaotrockenmasse, 37 % Zucker, 27 % Kakaobutter, unter 1 % Sojalecithin und unter 0,1 % Vanilleextrakt ausgestaltet sein, die beispielsweise Massenanteile von 41 % Fett, 25 % gesättigten Fettsäuren, 47 % Kohlenhydraten, 45 % Zucker, 3,8 % Ballaststoffen, 7,1 % Eiweiß und 0,18 % Salz sowie die in Tabelle 1 aufgeführten, zugesetzten Nährstoffe enthält.

Figur 2 zeigt eine schematische Ausgestaltung eines beispielhaften, erfindungsgemäßen Verfahrens 99. Als erster Verfahrensschritt dieses Beispiels erfolgt das Herstellen 100 einer Schokoladengrundmasse mit üblichen Methoden der Schokoladenherstellung. Dabei wird beispielsweise eine Kakaotrockenmasse mit Kakaobutter, Zucker, Vollmilchpulver, einem Emulgator wie Sojalecithin und/oder Gewürzen wie Vanilleextrakt zu einer Schokoladengrundmasse vermischt. Und die Schokoladengrundmasse wird weiterhin vermahlen, conchiert und temperiert. Beispielsweise gleichzeitig mit dem Herstellen 100 der Schokoladengrundmasse kann das Herstellen 110 einer Nährstoffmischung erfolgen, zum Beispiel indem kommerziell erhältliche Vitamine und Mineralstoffe in Pulverform, beispielsweise in einem Trommelmischer, mit einem Trägerstoff, zum Beispiel Dextrose, vermischt werden. Nach den beiden Herstellungsschritten erfolgt das Zugeben 120 von beispielsweise 1,25 kg der Nährstoffmischung zu 25 kg der Schokoladengrundmasse, wobei die Schokoladengrundmasse zum Beispiel durch Heizwiderstände auf beispielsweise 30,8 °C temperiert wird. Beispielsweise gleichzeitig mit dem Zugeben 120 beginnt das Vermischen 130 der Nährstoffmischung mit der Schokoladengrundmasse, zum Beispiel durch Rühren der Schokoladengrundmasse während einer Mischzeit von beispielsweise 15 min. Für eine möglichst einfache Prozessführung entspricht die Mischtemperatur vorteilhafterweise der Zugabetemperatur. Nach dem Mischen erfolgt das Abkühlen 140 der Schokolade auf eine Umgebungstemperatur, beispielsweise durch Konvektion, wobei die Schokoladenmasse, beispielsweise in einer Tafelform, zu einer Schokolade erstarrt.

Merkmale, die im Kontext eines Beispiels dargestellt sind, können erfindungsgemäß auch anders kombiniert werden.

### Bezugszeichenliste

- 1: Schokolade
- 10: Unterteilung
- 20: Portionsstück
- 99: Verfahren
- 100: Herstellen einer Schokoladengrundmasse
- 110: Herstellen einer Nährstoffmischung
- 120: Zugeben
- 130: Vermischen
- 140: Abkühlen

## Patentansprüche

1. Schokolade (1) mit zugesetzten Nährstoffen, wobei die Nährstoffe Vitamine und/oder Mineralstoffe umfassen,
***dadurch gekennzeichnet, dass***
zumindest einer der zugesetzten Nährstoffe in der Schokolade (1) in einer solchen Dosierung vorliegt, dass die beim Verzehr der Schokolade aufgenommene biologisch wirksame Dosis des Nährstoffes einem Zusatzbedarf schwangerer und/oder stillender Frauen an diesem Nährstoff entspricht.

2. Schokolade (1) gemäß Anspruch 1,
***dadurch gekennzeichnet, dass***
zumindest einer der zugesetzten Nährstoffe in der Schokolade (1) homogen verteilt ist.

3. Schokolade (1) gemäß Anspruch 1 oder 2,
***dadurch gekennzeichnet, dass***
zumindest einer der zugesetzten Nährstoffe in der Schokolade (1) in einer solchen Dosierung vorliegt, dass die beim Verzehr der Schokolade (1) aufgenommene biologisch wirksame Dosis des Nährstoffes dem individuellen Zusatzbedarf einer schwangeren und/oder stillenden Frau an diesem Nährstoff entspricht.

4. Schokolade (1) gemäß Anspruch 3,
***dadurch gekennzeichnet, dass***
die zugesetzten Nährstoffe keine Ascorbinsäure und/oder keine Dehydroascorbinsäure (DHA), bevorzugt keine Stoffe, die das Harnsteinrisiko einer Konsumentin der Schokolade (1) erhöhen, umfassen.

5. Schokolade (1) gemäß einem der Ansprüche 1 bis 4,
***dadurch gekennzeichnet, dass***
die Schokolade (1) pro 100 g Schokoladenmasse zugesetzte Nährstoffe in folgender biologisch wirksamer Dosis enthält:
a. 0,75-15 mg, bevorzugt 1,2-1,8 mg, mehr bevorzugt 1,5 mg, Vitamin A;
b. 0,5-10 mg, bevorzugt 0,5-1,4 mg, mehr bevorzugt 1 mg, Vitamin B1;
c. 0,75-15 mg, bevorzugt 1,2-1,8 mg, mehr bevorzugt 1,5 mg, Vitamin B2;
d. 8,5-170 mg, bevorzugt 14-20 mg, mehr bevorzugt 17 mg, Vitamin B3 (Niacin);
e. 3-60 mg, bevorzugt 4,8-7,2 mg, mehr bevorzugt 6 mg, Vitamin B5 (Panthotensäure);
f. 1-20 mg, bevorzugt 1,5-2,4 mg, mehr bevorzugt 2 mg, Vitamin B6;
g. 0,3-6 mg, bevorzugt 0,48-0,72 mg, mehr bevorzugt 0,60 mg, Vitamin B9 (Follat);
h. 2-40 µg, bevorzugt 3,2-4,8 µg, mehr bevorzugt 4 µg, Vitamin B12;
i. 25-500 µg, bevorzugt 40-60 µg, mehr bevorzugt 50 µg, Vitamin D;
j. 10-200 mg, bevorzugt 16-24 mg, mehr bevorzugt 20 mg, Vitamin E;
k. 15-300 mg, bevorzugt 24-36 mg, mehr bevorzugt 30 mg, Vitamin H (Biotin);
l. 30-600 µg, bevorzugt 48-72 µg, mehr bevorzugt 60 µg, Vitamin K;
m. 0,5-10 g, bevorzugt 0,5-1,4 g, mehr bevorzugt 1,0 g, Calcium;
n. 25-500 µm, bevorzugt 40-60 µg, mehr bevorzugt 50 µg, Chrom;
o. 10-200 µg, bevorzugt 15-24 µg, mehr bevorzugt 20 µg, Jod;
p. 0,4-8 g, bevorzugt 0,66-0,96 g, mehr bevorzugt 0,80 g, Phosphor;
q. 35-700 mg, bevorzugt 56-84 mg, mehr bevorzugt 70 mg, Selen und/oder
r. 5-100 mg, bevorzugt 8-12 mg, mehr bevorzugt 10 mg, Zink.

6. Schokolade (1) gemäß einem der Ansprüche 1 bis 5,
***dadurch gekennzeichnet, dass***
die Schokolade (1) eine Milchschokolade, mit bevorzugt mindestens 35 %, mehr bevorzugt mindestens 42 % Kakaobestandteilen, oder eine Bitterschokolade, mit bevorzugt mindestens 55 %, mehr bevorzugt mindestens 60 % Kakaobestandteilen, ist.

7. Schokolade (1) gemäß einem der Ansprüche 1 bis 6,
***dadurch gekennzeichnet, dass***
die Schokolade (1) zumindest ein Anzeigemittel für eine Dosieranleitung umfasst, wobei das Anzeigemittel bevorzugt eine Anzahl von Unterteilungen (10), bevorzugt Sollbruchstellen, und/oder zumindest eine Beschriftung umfasst.

8. Verfahren (99) zur Herstellung einer Schokolade, insbesondere gemäß einem der Ansprüche 1-7, zumindest mit folgenden Schritten:
a. Herstellen (100) einer Schokoladengrundmasse;
b. Herstellen (110) einer Nährstoffmischung mit Nährstoffen, wobei die Nährstoffe Vitamine und/oder Mineralstoffe umfassen, wobei zumindest einer der zugesetzten Nährstoffe in der Schokolade in einer solchen Dosierung vorliegt, dass die beim Verzehr der Schokolade aufgenommene biologisch wirksame Dosis des Nährstoffes einem Zusatzbedarf schwangerer und/oder stillender Frauen an diesem Nährstoff entspricht;
c. Zugeben (120) der Nährstoffmischung zu der Schokoladengrundmasse, wobei die Schokoladengrundmasse auf eine Zugabetemperatur oberhalb der minimalen Schmelztemperatur der Schokoladengrundmasse temperiert wird;
d. Vermischen (130) der Nährstoffmischung mit der Schokoladengrundmasse zu einer Schokoladenmasse während einer Mischzeit, wobei die Schokoladenmasse auf eine Mischtemperatur oberhalb der minimalen Schmelztemperatur der Schokoladengrundmasse temperiert wird, und
e. Abkühlen (140) der Schokoladenmasse auf eine Umgebungstemperatur, wobei die Schokoladenmasse zu einer Schokolade erstarrt.

9. Verfahren (99) nach Anspruch 8
***dadurch gekennzeichnet, dass***
die Mischzeit kürzer ist als die minimale Zersetzungszeit des temperaturlabilsten Nährstoffs der Nährstoffmischung bei der Mischtemperatur.

10. Verfahren (99) nach Anspruch 9
***dadurch gekennzeichnet, dass***
die Zugabetemperatur und/oder die Mischtemperatur in einem Temperaturbereich oberhalb der minimalen Schmelztemperatur der Schokoladengrundmasse und unterhalb der minimalen Zersetzungstemperatur des temperaturlabilsten Nährstoffs der Nährstoffmischung liegt.

11. Verfahren (99) gemäß Anspruch 10,
***dadurch gekennzeichnet, dass***
die Zugabetemperatur und/oder die Mischtemperatur in den mittleren 80 %, bevorzugt 40 %, besonders bevorzugt 20 %, des Temperaturbereichs liegt.

12. Verfahren (99) gemäß einem der Ansprüche 8 bis 11,
***dadurch gekennzeichnet, dass***
die Nährstoffmischung in Pulverform oder als flüssige Lösung oder als Dispersion in einer Flüssigkeit zugegeben wird.

13. Verfahren (99) gemäß einem der Ansprüche 8 bis 12,
***dadurch gekennzeichnet, dass***
die Nährstoffmischung eine als Schokoladenzutat geeignete Trägersubstanz, bevorzugt einen Zucker, besonders bevorzugt Dextrose, enthält.
